# EUROPÄISCHE PATENTSCHRIFT

(11) **EP 0 772 125 B1**
(45) Veröffentlichungstag und Bekanntmachung des Hinweises auf die Patenterteilung: **21.10.1998**
(21) Anmeldenummer: 96115268.3
(22) Anmeldetag: 24.09.1996
(51) Int. Cl.: G06F 11/00

(54) **Systemstart eines Rechners für den Leitstand einer Druckmaschine**
System start-up for a computer controlling a printing machine
Démarrage d'un ordinateur pour le contrôle d'une machine d'impression

(30) Priorität: 26.10.1995 DE 19539793
(43) Veröffentlichungstag der Anmeldung: 07.05.1997
(73) Patentinhaber: MAN Roland Druckmaschinen AG, 63075 Offenbach (DE)
(72) Erfinder: Duschl, Dieter, Dr., 63061 Offenbach (DE); Schlitz, Thomas, 63165 Mühlheim (DE)
(74) Vertreter: Stahl, Dietmar

(56) Entgegenhaltungen:
- EP-A- 0 280 035
- EP-A- 0 606 771
- WO-A-90/05418
- COMPUTERS & SECURITY, Bd. 11, Nr. 6, Oktober 1992, OXFORD GB, Seiten 563-579, XP000332272 COHEN F B: "DEFENSE-IN-DEPTH AGAINST COMPUTER VIRUSES"
- COMPUTERS & SECURITY, Bd. 9, Nr. 5, August 1990, OXFORD GB, Seiten 431-446, XP000147838 MCKOSKY R A ET AL.: "A FILE INTEGRITY CHECKING SYSTEM TO DETECT AND RECOVER FROM PROGRAM MODIFICATION ATTACKS IN MULTI-USER COMPUTER SYSTEMS"
- IBM TECHNICAL DISCLOSURE BULLETIN, Bd. 32, Nr. 11, 1.April 1990, Seiten 48-50, XP000097602 "SYSTEM FOR DETECTING UNDESIRED ALTERATION OF SOFTWARE"
- CAK COMPUTER ANWENDUNGEN Nr. 8, Oktober 1989, WIESBADEN, DE, Seiten 44 - 53 T. BÖRSTLER ET AL. 'Sabotage vorprogrammiert! Computer-Viren bedrohen die DatenbestÄnde'

## Beschreibung

Die Erfindung betrifft einen Rechner für den Leitstand einer Druckmaschine gemäß dem Oberbegriff von Anspruch 1.

Der Druckprozeß wird heute zunehmend von einem Leitstand aus gesteuert und überwacht. Von einem Leitstand können die verschiedensten Komponenten sowie Stellglieder in ihrem Ist-Zustand überwacht und entsprechend den Prozeßbedürfnissen verstellt werden. Über einen Druckmaschinen-Leitstand erfolgt auch die Erfassung, Verwaltung sowie Bearbeitung von Betriebsdaten der Druckaufträge. Als Daten sind beispielsweise Auftragsnummer, Kundenname, Auflagenzahl, Termine, Qualitätsdaten usw. zu nennen. Die DE 4 123 126 C1 beschreibt einen Rechner für den Leitstand einer Druckmaschine, welcher nach Art eines PC aufgebaut ist. Die Bedienung der Druckmaschine sowie die Auswahl von anzuzeigenden und verstellbaren Größen erfolgt hierbei über eine menuegeführte Benutzeroberfläche. Ferner ist als nicht flüchtiges, wiederbeschreibbares Speichermedium eine Festplatte vorgesehen.

Bei Rechnern, welche mit nicht flüchtigen, wiederbeschreibbaren Speichermedien zusammenarbeiten, kann es - absichtlich oder unabsichtlich - zu Datenmanipulationen kommen. Insbesondere ausführbare Programme können derartig verändert werden, so daß eine ordnungsgemäße Funktion des Rechners und somit auch eine Funktionssicherheit der Druckmaschine nicht mehr gewährleistet ist. Die bereits zitierte DE 4 123 126 C1 sieht demzufolge vor, Zugriffe auf Systemdaten des Rechners nur in Verbindung mit einer auf einer Diskette vorhandenen Code-Information, welche über das BIOS des Rechners gelesen wird, zuzulassen. Nicht zu vermeiden sind mit einem derartigen Rechnersystem jedoch Datenmanipultationen, welche durch sogenannte Computer-Viren entstehen. Diese werden in der Regel durch auswechselbare Speichermedien (auf (auf Disketten) oder einen Netzwerkanschluß in das Rechnersystem eingeschleust.

Systemausfälle bei Rechnern können aber insbesondere durch physikalische Schäden bei einem als Festplattenlaufwerk ausgebildeten wiederbeschreibbaren, nicht flüchtigem Speicher auftreten. Bei derartigen Schäden ist es als nachteilig anzusehen, daß ein physikalischer Defekt erst beim Lesen oder Beschreiben einer bestimmten Datei während einer Programmausführung festgestellt wird.

Die DE 4229 266 A1 schlägt zur Vermeidung von durch physikalische Defekte verursachte Festplattenausfällen einen Rechner für den Leitstand einer Druckmaschine mit zwei Festplattenlaufwerken vor. Im Normalbetrieb arbeitet dieser Rechner mit einem Festplattenlaufwerk, wobei von Zeit zu Zeit bzw. programmgesteuert stets ein Back-Up von Daten auf das zweite Festplattenlaufwerk erfolgt. Wird ein Defekt des Arbeits-Laufwerkes festgestellt, so erfolgt das Umsteuern auf das zweite Festplattenlaufwerk mittels einer speziellen Diskette. Auch hier erfolgt das Feststellen eines physikalischen Defektes erst beim Lesen der Datei, in dessen Sektor bzw. Spur der Defekt vorliegt. Manipulierte bzw. durch Viren veränderte Daten bzw. Programme sind durch dieses System ebenfalls nicht feststellbar.

Erfindungsgemäß ist vorgesehen, daß zumindest bei jedem Systemstart (Booten) vor dem Übertragen von Daten (Files) in den wiederbeschreibbaren, flüchtigen Speicher (RAM) durch eine im Rechner gespeicherte Programmroutine Informationen von wenigstens einigen der zu übertragenden Daten (Files) mit entsprechenden und bei der Installation des Systems ermittelten Informationen verglichen werden, und daß bei Feststellen eines Nichtübereinstimmung mit wenigstens einer dieser Informationen den Betrieb des Rechnersystems beeinflussende Steuerungsschritte und/oder die Anzeige von Warnhinweisen auslösbar ist. Das Vergleichen der Informationen zur Feststellung von Veränderungen der Dateien kann zusätzlich auch während des Rechnerbetriebs vor dem Aufrufen und Übertragen einer jeweiligen Datei erfolgen.

Die vorliegende Erfindung bietet hier den Vorteil, daß nach der herstellerseitigen Installation des Rechnersystems, also dem Speichern sämtlicher Programme auf der Festplatte ein zu dieser Zeit durch aufwendige Prüfmethoden virenfreier Zustand des Systems jederzeit wieder feststellbar ist. Dies bedeutet mit anderen Worten, daß, wenn Systemdateien einmal in einem störungsfreien Zustand auf die Festplatte geschrieben worden sind, der Rechner bei jedem Systemstart erneut feststellt, ob dies noch der Fall ist. Durch die durch den Rechner bei jedem Systemstart durchgeführte Überprüfung des ordnungsgemäßen Zustandes der Systemdateien ist frühzeitig feststellbar, ob eine Manipulation oder sonstige Veränderungen von Dateien stattgefunden hat. Wird bei einem Systemstart des erfindungsgemäßen Rechners eine Veränderung von Dateien festgestellt, so erfolgt eine Fehlermeldung, insbesondere in Verbindung mit einem Abbruch des Systemstartes und gegebenenfalls eine Korrektur der defekten Datei, was noch weiter untenstehend erläutert wird. Somit kann es durch veränderte Dateien bzw. Programme nicht zu unübersehbar großen Schäden oder gar zu Fehlfunktionen von der durch den Rechner gesteuerten Maschine kommen.

Aus der WO-A-9005418 ist ein Rechner mit einem Festplatten laufwerk und einem flüchtigen Speicher (RAM) bekannt, bei welchem bei jedem Systemstart Dateien von der Festplatte in den flüchtigen Speicher (RAM) übertragen und ggf. zur Ausführung gebracht werden, vor dem Übertragen von Dateien durch im Rechner gespeicherte Programmroutinen Informationen von wenigstens einigen der zu übertragenden Dateien mit entsprechenden und bei der Installation des Systems ermittelten Informationen verglichen werden, und wobei bei Feststellen einer Nichtübereinstimmung mit wenigstens einer dieser Informationen den Betrieb des Rechnersystemes beeinflußende Steuerschritte und/oder die Anzeige von Warnhinweisen auslösbar sind.

Aus CAK Computer-Anwendung, Nr. 8, Okt. 1989, S. 44-53, Wiesbaden, DE; T. Börstler et al.: "Sabotage vorprogrammiert! Computer-Viren bedrohen die Datenbestände" werden die Grundtypen bzw. die Wirkungsweisen von Computer-Viren angegeben. Ebenfalls erfolgt eine Angabe von Maßnahmen zur Virenbekämpfung.

Bekannt sind sogenannte Viren-Check-Programme (z. B. McAfee-Virenschutz), jedoch können diese Viren-Prgramme lediglich die zum Zeitpunkt ihrer Herstellung bekannten Viren aufspüren und somit entsprechende Fehlermeldungen zur Anzeige bringen. Dies hat seine Ursache darin, daß Viren-Programme die Festplatte nach bekannten Mustern (Strukturen) absuchen, was zum einen sehr zeitaufwendig ist, zum anderen das Entdecken noch unbekannter Viren mit völlig neuartiger Struktur unmöglich macht. Ferner ist es auch möglich, daß tatsächlich virenfreie Files als "verseucht" identifiziert werden, da diese zufällig eine auf einen Virus hinweisende Struktur aufweisen.

Aufgabe der vorliegenden Erfindung ist es daher, einen Rechner gemäß dem Oberbegriff von Anspruch 1 derartig weiterzubilden, so daß eine frühstmögliche Erkennung von veränderten Daten, insbesondere verursacht durch physikalische Defekte, Manipulationen oder Computer-Viren, ermöglicht wird.

Gelöst wird diese Aufgabe durch die kennzeichnenden Merkmale von Anspruch 1. Weiterbildungen der Erfindung ergeben sich aus den Unteransprüchen.

Nach einer Ausführungsform der Erfindung ist vorgesehen, daß beim Booten des als PC ausgebildeten Rechners eine Prüfung bestimmter bzw. sämtlicher auf der Festplatte befindlicher Files bzw. Dateien erfolgt. Hierbei wird ausgenutzt, daß zumindest bestimmte Files - dies ist bei einer benutzergeführten Bedienoberfläche eines Leitstandsrechners stets der Fall - den Inhalt, zumindest aber ihre äußere Struktur nicht ändern. Demzufolge werden bei der werksseitigen Installation des Systems bestimmte Files bzw. sämtliche unveränderlichen ausführbaren Programme gespiegelt, d.h. es werden von diesen Files nicht ausführbare und auch nicht aufrufbare Kopien angelegt. Dieses Spiegeln bzw. Anlegen sogenannter Prüfkopien (Security-Bereiche) erfolgt werksseitig erst dann, wenn durch aufwendigste Prüfmaßnahmen festgestellt worden ist, daß das Speichermedium keine Defekte aufweist (Fehler Festplatte) und Computer-Viren nicht vorhanden sind.

Bei jedem Systemstart, also bei jedem Boot-Vorgang des Leitstandsrechners erfolgt durch eine während des Boot-Vorganges aktivierte Programmroutine ein Vergleich der zur Prüfung vorgesehenen Files bzw. Dateien mit den entsprechenden gespiegelten und nicht aufrufbaren Programmen (Files des Security-Bereich). Wird eine Identität der während des Boot-Vorganges aufgerufenen Programme bzw. Files mit den gespiegelten Programmen bzw. Files festgestellt, so ist dies gemäß dem Axiom der vollständigen Induktion ein Beweis dafür, daß eine Veränderung bzw. Manipulation nicht stattgefunden hat. Erfolgt die Feststellung, daß auch nur ein einziges File bzw. ein Teil eines Files/Programmes die vorgesehene Identität zu den gespiegelten Files/Programmen nicht vorliegt, so wird der Rechner gegen ein weiteres Anlaufen gesperrt. Der Boot-Vorgang wird unter Generierung eines Alarms / einer Fehlermeldung unterbrochen.

Gemäß der voranstehend skizzierten Ausführungsform der Erfindung ist vorgesehen, daß zumindest bestimmte Files bzw. Programme nach einer werksseitigen Prüfung auf nicht Vorhandensein von Viren gespiegelt werden, d.h. sogenannte Prüf-Kopien dieser Files bzw. Programme angelegt werden. Bei jedem Systemstart, also Booten des Rechners erfolgt somit ein Vergleich der entsprechend vorgesehenen Files bzw. Programme mit den entsprechenden gespiegelten und sich stets in einem einwandfreien Zustand befindenden Files bzw. Dateien. Die bei der werksseitigen Installation des Rechnersystems nach dem Feststellen des nicht Vorhandenseins von Viren angelegten Spiegel-Files bzw. Kopien können sich dabei auf einer Festplatte des Rechners selbst befinden. Erfindungsgemäß kann auch vorgesehen sein, daß bei einem Rechner mit zwei Festplatten-Laufwerken diese gespiegelten Files bzw. Programme auf derjenigen Festplatte angeordnet sind, von der im normalen Betriebsfall keine ausführbaren Programme bzw. Files geladen werden.

Anstelle eines Vergleiches von ausführbaren Files/Programmen mit entsprechend gespiegelten Files/Programmen kann ebenfalls vorgesehen sein, daß durch eine beim Booten aktivierte Programmroutine eine Prüfsummenbildung vorgesehener Files/Programme erfolgt und die entsprechenden Prüfsummen mit bei werkseitiger Installation des Rechnersystems abgespeicherten Werten verglichen werden. Eine insbesondere durch Viren verursachte Manipulation derartiger Files wird ebenfalls mit höchster Wahrscheinlichkeit eine Veränderung der bei jedem Boot-Vorgang durchgeführten Prüfsummenbildung nach sich ziehen, so daß auch auf diese Weise mit größtmöglicher Wahrscheinlichkeit eine Datenveränderung feststellbar ist.

Durch die erfindungsgemäß vorgesehene Systemsprüfung bei jedem Boot-Vorgang des Rechners ist jedoch nicht nur gewährleistet, daß das Rechnersystem in einem einmal werksseitig festgestellten fehlerfreien Zustand hochläuft. Gemäß einer Weiterbildung der Erfindung erfolgt ferner eine sogenannte Selbstheilung von insbesondere durch physikalische Defekte verursachten Fehlern in Dateien auf einem Festplattenlaufwerk.

Wird beim Starten des Rechnersystems eine Veränderung eines Files in Verbindung mit einem durch das Festplattenlaufwerk generierten und einen physikalischen Fehler anzeigendes Signal festgestellt, so erfolgt - in dem für die Speicherverwaltung vorgesehenen Speicher - eine sofortige Umbenennung dieser Datei in eine insbesondere derartige Form, so daß ein File vorliegt, welches unter dem ursprünglichen Namen nicht mehr aufrufbar und zur Ausführung bringbar ist. Da gemäß einer Ausführungsform der Erfindung vorgesehen ist, werksseitig bestimmte Dateien bzw. Files in gespiegelter Form auf die Festplatte zu schreiben, so ist es möglich, diese Files bzw. Dateien durch ein Umbenennen in eine Form zu wandeln, so daß mit diesen Dateien/Files ein zumindest vorübergehender Betrieb des Rechnersystems möglich ist. Durch dieses Umbenennen tritt somit das gespiegelte, dem Inhalte nach doppelt vorliegende File bzw. die in nicht aufrufbarer Form vorliegende Kopie eines Programmteiles an die Stelle des als gestört festgestellten Files bzw. Programmes und kann zumindest für eine vorgesehene Zeit die entsprechenden Aufgaben erfüllen. Das als gestört festgestellte und darafhin umbenannte File verbleibt an dem ursprünglichen Speicherbereich, also insbesondere an der Stelle der Festplatte mit dem festgestellten Defekt. Dabei kann erfindungsgemäß weiterbildend vorgesehen sein, daß ein derartiges Ersetzen eines Programmteiles neben der Abgabe einer Fehlermeldung bzw. eines Alarms einen eingeschränkten Betrieb des Rechners und der von dem Rechner gesteuerten Maschine bewirkt.

## Patentansprüche

1. Rechner für den Leitstand einer Druckmaschine, mit wenigstens einem wiederbeschreibbaren, nicht flüchtigen Speicher, insbesondere in Form eines oder mehrerer Festplattenlaufwerke und einer wiederbeschreibbaren flüchtigen Speichereinrichtung (RAM) wobei bei jedem Systemstart (Booten) Daten von dem wiederbeschreibbaren, nicht flüchtigen Speicher auf den wiederbeschreibbaren, flüchtigen Speicher (RAM) übertragbar und ggf. zur Ausführung bringbar sind,
**dadurch gekennzeichnet,**
daß der wenigstens eine wiederbeschreibbare, nicht flüchtige Speicher den Inhalt wenigstens einer Datei redundant in einer aufrufbaren und zur Ausführung bringbaren sowie in einer durch das Betriebssystem nicht aufrufbaren, nicht zur Ausführung bringbaren Form enthält, daß zumindest bei jedem Systemstart (Booten) vor dem Übertragen von Dateien (Files) in den wiederschreibbaren flüchtigen Speicher (RAM) durch eine im Rechner gespeicherte Programmroutine wenigstens einige der zu übertragenden Dateien (Files) mit den entsprechenden und bei der Installation des Systems gebildeten nicht ausführbaren Formen der Darteien verglichen werden, und daß bei Feststellen einer Nichtübereinstimmung des Inhalts der beiden Formen der Dateien die als mit einer Inhaltsveränderung festgestellte Datei in einen nicht aufrufbaren Zustand sowie die zunächst nicht aufrufbare und zur Ausführung bringbare Form dieser Datei in einen aufrufbaren und zur Ausführung bringbaren Zustand versetzbar und daraufhin der Inhalt in den wiederbeschreibbaren, flüchtigen Speicher (RAM) übertragbar ist.

## Claims

1. Computer for the control desk of a printing press with at least one re-writable non-volatile memory, in particular in the form of one or several hard disc drives and a re-writable volatile memory unit (RAM) wherein on each system start-up (booting), data can be transferred and, if appropriate, brought into operation from the re-writable, non-volatile memory on to the re-writable volatile memory (RAM), characterised in that the at least one re-writable, non-volatile memory contains the content of at least one data file redundantly in a form which can be called up and brought to execution as well as in a form which cannot be called up by the operating system and is not bringable to execution, that at least on each system start-up (booting) prior to the transfer of data files (files) into the re-writable volatile memory (RAM) by means of a programme routine stored in the computer, at least some of the data files (files) to be transferred are compared with the corresponding forms of the data files formed on installation of the system and which cannot be called up, and that on detection of non-agreement of the content of both forms of the data files, the data file determined to have content change is transferable into a non-callupable condition as well as the initially non-callupable and bringable to execution form of this data file can be converted into a callable up and executable condition and thereafter the content is transferable into the re-writable volatile memory (RAM).

## Revendications

1. Calculateur pour le poste de commande d'une machine d'impression, comportant au moins une mémoire réinscriptible, non volatile, en particulier sous forme d'un ou plusieurs lecteurs de disque dur et un dispositif de mémoire volatile réinscriptible (mémoire vive), des données de la mémoire réinscriptible non volatile pouvant être transmises, à chaque démarrage du système, à la mémoire réinscriptible volatile (mémoire vive) et, le cas échéant, pouvant être exécutées,
caractérisé en ce que la mémoire réinscriptible non volatile contient le contenu d'au moins un fichier de données de façon redondante sous une forme pouvant être appelée et pouvant être exécutée, ainsi que sous une forme ne pouvant pas être appelée par le système d'exploitation et ne pouvant pas être exécutée, en ce que, au moins à chaque démarrage du système avant le transfert d'ensembles de données (fichiers) dans la mémoire volatile réinscriptible (mémoire vive), au moins quelques-uns des ensembles de données (fichiers) à transférer sont comparés avec les formes correspondantes des ensembles de données, ne pouvant pas être exécutées et formées lors de l'installation du système, par une routine de programme mémorisée dans le calculateur, et en ce que, lorsqu'il est déterminé une non coïncidence du contenu des deux formes des ensembles de données, l'ensemble de données déterminé comme ayant une modification de contenu peut être amené dans un état qui ne peut pas être appelé, ainsi que la forme de cet ensemble de données qui tout d'abord ne peut pas être appelée et exécutée, peut être amenée dans un état pouvant être appelé et exécuté et, ensuite, le contenu peut être transféré dans la mémoire réinscriptible volatile (mémoire vive).
